# EUROPEAN PATENT SPECIFICATION

(11) **EP 1 684 486 B1**
(45) Date of publication and mention of the grant of the patent: **04.05.2011**
(21) Application number: 06000907.3
(22) Date of filing: 17.01.2006
(51) Int. Cl.: H04L 29/06, H04L 29/12

(54) **Call processing apparatus and method in wireless network**
Vorrichtung und Verfahren zum Verbindungsaufbau in einem drahtlosen Netzwerk
Dispositif et procédé d'établissement d'une connexion dans un réseau sans fil

(30) Priority: 19.01.2005 KR 2005005145
(43) Date of publication of application: 26.07.2006
(73) Proprietor: Samsung Electronics Co., Ltd., Suwon-si, Gyeonggi-Do (KR)
(72) Inventor: Chun, Joon-Sung, Yeongtong-gu Suwon-si Gyeonggi-do (KR)
(74) Representative: Lang, Johannes

(56) References cited:
- US-A1- 2002 095 516
- US-A1- 2003 088 767
- US-A1- 2004 160 946
- US-A1- 2005 008 008
- WEI YU: "Peer-to-peer approach for global deployment of voice over IP service" COMPUTER COMMUNICATIONS AND NETWORKS, 2003. ICCCN 2003. PROCEEDINGS. THE 12TH INTERNATIONAL CONFERENCE ON DALLAS, TX, USA 20-22 OCT. 2003, PISCATAWAY, NJ, USA,IEEE, 20 October 2003 (2003-10-20), pages 109-114, XP010695705 ISBN: 0-7803-7945-4

## Description

### BACKGROUND OF THE INVENTION

### 1. Field of the Invention

The present invention relates to a call processing apparatus and method in a Wireless Fidelity (WiFi) network and, more particularly, to an apparatus and method which are adapted to directly establish call connection between in-house WiFi terminals without a soft-switch, thereby enabling communication between the terminals.

### 2. Description of the Related Art

In general, a wireless local area network (hereinafter referred to as "WLAN") is a data communication system produced through the expansion of a wired local area network (LAN), and adapted to transmit or receive data by air without cable connection.

The WLAN can be connected with the Internet via a wireless relay or access point (hereinafter referred to as "AP"). In the case of a household, an Internet sharing function can be imparted to an AP so as to share an Internet line.

A WiFi terminal is an Internet telephone usable in a WLAN environment, which is produced by combining the WLAN with the Voice over Internet Protocol (VoIP) technique.

The WiFi terminal has to share a call processing message with an external soft-switch, which is connected to the Internet via the AP, in order to establish call connection with a terminal in another location.

The soft-switch is adapted to manage telephone numbers, Internet Protocol (IP) addresses and call statuses of Internet telephones. Upon receiving a predetermined call processing message from an Internet telephone, the soft-switch establishes a call connection with a destination terminal.

Since a Legacy telephone utilizes circuit switching, a physical leased line connects a common telephone with a relay.

Thus, the relay can determine the status of the telephone based upon physical signals, and is used in a fixed place where the leased line is installed.

However, since the Internet telephone uses an IP network based upon packet switching, the soft-switch has no physical means for detecting the status of the telephone. The soft-switch can detect the status of the telephone when the telephone periodically transmits register messages to the soft-switch.

When the Internet telephone requests call connection with an external destination telephone via the Internet, the soft-switch converts the telephone number of the destination telephone to an IP address by using registration data of the destination telephone, and transmits a call processing message to the IP address of the destination terminal so as to establish a call connection between the two telephones.

US 2003 088767 discloses a plurality of Integrated Devices provided with an Internet connection and a telephone number. The telephone number has associated telephone connectivity via a telephone line, such that the Integrated Devices can be connected to by dialing the associated telephone number via telephones on the Public Switched Telephone Network (PSTN). The Internet connection has an associated Internet protocol (IP) address which is dynamically assigned when one device calls the telephone number of a called device via the PSTN.

US 2005 008008 discloses a gateway for an internet telephone system that manages calls to and from personal computers and enables the personal computers to use the internet telephone system with an IP address assigned by a DHCP server or a private IP address. The gateway has a LAN receiver and a LAN transmitter. If the LAN receiver receives an incoming call from a LAN and if the incoming call accompanies an IP address as a receiver address, the LAN receiver requests the LAN transmitter to make a call based on the incoming call, and the LAN transmitter requests the logger to log information about the call.

IEEE document "Computer Communications and Networks, 2003. ICCCN 2003. Proceedings. The 12th International Conference on Dallas, TX, USA 20-22 Oct. 2003, Piscataway, NJ, USA, *IEEE - ISBN 0-7803-7945-4, Source information: Page(s): 109-114"* discloses a study about designing a scalable voice over IP routing architecture from the network control plan consideration, aiming at dealing with issues related to the global deployment of voice over IP service.

In order to enable voice communication through a call connection between Internet terminals, a call connection request message is transmitted from a calling Internet terminal to a counterpart Internet terminal via a soft-switch. However, this process is equally applied to call connection between two Internet terminals located in the same house.

That is, since a call is connected constantly via the soft-switch even though the Internet terminals are located in the same house, the call connection between Internet terminals in the same house may be disadvantageously disabled if an Internet line connected to the house malfunctions. In addition, this may apply an unnecessary load to the soft-switch.

### SUMMARY OF THE INVENTION

It is, therefore, an object of the present invention to provide a call processing apparatus and method in a Wireless Fidelity (WiFi) network, the apparatus and method being adapted to directly establish a call connection between in-house WiFi terminals without a soft-switch, thereby enabling communication between the terminals.

According to an aspect of the invention for realizing the above objects, there is provided a call processing method in a wireless terminal of an Internet Protocol (IP) network, the method comprising the steps of: constructing an IP table for enabling communication connection between terminals located in a predetermined area; and, if a telephone number inputted by a user for call connection to a destination terminal is identical to a telephone number of a terminal having an intercommunication option set in the IP table, transmitting a call connection request message directly to the destination terminal according to the IP information of the terminal set in the IP table and corresponding to the telephone number so as to establish a communication call connection between terminals.

The IP information of the terminal set in the IP table preferably includes at least one of telephone numbers, IP addresses corresponding to the telephone numbers, and port data of terminals having an intercommunication function.

Preferably, the step of establishing an intercommunication call connection comprises: upon receiving the telephone number of the destination terminal from the user, searching the IP table to determine whether the received telephone number has an intercommunication option; and, if the received telephone number has an intercommunication option, transmitting the call connection request message to the destination terminal via an access point according to an IP address and port data set in the IP table and corresponding to the telephone number.

Preferably, the step of establishing an intercommunication call connection comprises: if the received telephone number does not have an intercommunication option, transmitting a call connection request message, including the telephone number received from the user, to a soft-switch via the Internet so as to establish a call connection with the destination terminal by using an IP table set in the soft-switch.

In addition, preferably, the IP table in which the intercommunication option is set is constructed by adding an intercommunication option setup field to a phone book function of the terminals, or by providing a separate intercommunication option setup IP table in the form of a database.

In addition, the step of establishing an intercommunication call connection comprises: if a response message with respect to the call connection request message is not received from the destination terminal within a predetermined time period, providing the call connection request message to the soft-switch via the Internet so as to transmit the call connection request message to the destination terminal via the soft-switch.

According to another aspect of the invention for realizing the above objects, there is provided a call processing method in a terminal at a WiFi access point, the method comprising the steps of: constructing an IP table in the form of a database so as to enable a communication call connection between first and second terminals located in a service area of the access point; if a call connection request message, including the telephone number of the second terminal, is received from the first terminal via a first network, searching the IP table to determine whether an intercommunication option for intercommunication call connection is set in the second terminal; and, if the intercommunication option for intercommunication call connection is set in the second terminal, transmitting the call connection request message to the second terminal via the first network according to IP information corresponding to the telephone number of the second terminal set in the IP table so as to establish an intercommunication call connection to the second terminal.

Preferably, the searching step comprises: if the intercommunication option is not set in the telephone number of the second terminal, transmitting the call connection request message, including the telephone number of the second terminal, to the soft-switch via a second network so as to establish a call connection to the second terminal by using an IP table set in the soft-switch.

Preferably, the step of establishing an intercommunication call connection comprises: if a response message with respect to the call connection request message is not received from the destination terminal within a predetermined time period, providing the call connection request message to the soft-switch via the Internet so as to transmit the call connection request message to the destination terminal via the soft-switch.

According to a further aspect of the invention for realizing the above objects, there is provided a call processing method of a terminal in an IP network, the method comprising the steps of: constructing IP tables in first and second terminals for enabling intercommunication between the first and second terminals located in a predetermined area; at the first terminal, if the telephone number of the second terminal received from a user for call connection with the second terminal is set as an intercommunication option in the IP table of the first terminal, transmitting a call connection request message, including the IP address and port data of the second terminal set in the IP table, to an access point via a wireless LAN; and, at the access point, transmitting the call connection request message to the second terminal via the wireless LAN according to the IP address and port data of the second terminal included in the call connection request message received from the first terminal via the wireless LAN so as to establish an intercommunication call connection between the first and second terminals.

According to another aspect of the invention for realizing the above objects, there is provided a call processing method of a terminal in an IP network, the method comprising the steps of: constructing an IP table in an access point for enabling communication between terminals located in a predetermined area; at a first terminal, transmitting a call connection request message, including the telephone number of a second terminal received from a user, to the access point via a wireless LAN; and, at the access point, if the telephone number of the second terminal included in the call connection request message received from the first terminal is set as an intercommunication option in the access point, transmitting the call connection request message, including the IP address and port data of the second terminal set in the IP table, to the second terminal via the wireless LAN so as to establish an intercommunication call connection between the first and second terminals.

According to another aspect of the invention for realizing the above objects, there is provided a call processing apparatus for a terminal in an IP network, the apparatus comprising: a memory unit for storing an IP table for enabling an intercommunication call connection between terminals located in a predetermined area; and a call processing unit which, when a telephone number received from a user for call connection with a destination terminal is set as an intercommunication option in the IP table of the memory, transmits a call connection request message directly to the destination terminal according to the IP information of the destination terminal corresponding to the telephone number set in the IP table so as to establish an intercommunication call connection between the terminals.

Preferably, the call processing unit includes: a determining part which, upon receiving the telephone number of a destination terminal from a user, searches the IP table to determine whether the telephone number is set as an intercommunication option; and a call processing part which, when the telephone number is set as an intercommunication option, transmits the call connection request message to the destination terminal via the access point according to the IP address and port data corresponding to the telephone number set in the IP table.

In addition, preferably, when it is determined that the received telephone number does not have an intercommunication option, the call processing part transmits a call connection request message, including the telephone number received from the user, to a soft-switch via the Internet so as to establish a call connection with the destination terminal by using an IP table set in the soft-switch.

According to a further aspect of the invention for realizing the above objects, there is provided a call processing apparatus for a terminal in an access point, the apparatus comprising: a memory unit for storing an IP table in the form of database for enabling an intercommunication call connection between first and second terminals located in a service area of the access point; and a call processing unit which, when a telephone number of the second terminal included in a call connection request message received from the first terminal via a first network is set as an intercommunication option in the IP table of the memory unit, transmits the call connection request message to the second terminal via the first network according to IP information corresponding to the telephone number of the second terminal set in the IP table so as to establish an intercommunication call connection between the first and second terminals.

Preferably, when the intercommunication option is not set in the telephone number of the second terminal, the call processing unit transmits the call connection request message, including the telephone number of the second terminal, to a soft-switch via a second network so as to establish a call connection to the second terminal by using an IP table set in the soft-switch.

According to another aspect of the invention for realizing the above objects, there is provided a WiFi network comprising: a terminal for storing an IP table for enabling intercommunication between terminals located in a predetermined area in the form of database, and responsive to the telephone number of a destination terminal received from a user being set as an intercommunication option in the IP table for transmitting a call connection request message, including the IP address and port data of the destination terminal set in the IP table, via a wireless LAN; and an access point for transmitting the call connection request message to the destination terminal via the wireless LAN according to the IP address and port data of the destination terminal included in the call connection request message so as to establish an intercommunication call connection with the destination terminal.

According to yet another aspect of the invention for realizing the above objects, there is provided a WiFi network comprising: a terminal for transmitting a call connection request message, including the telephone number of a destination terminal received from a user, via a wireless LAN; and an access point for storing an IP table for enabling intercommunication between terminals located in a predetermined area in the form of database, and responsive to the telephone number of a destination terminal included in the call connection request message received from the terminal not being an intercommunication option in the IP table for transmitting the call connection request message to the destination terminal via the wireless LAN according to the IP address and port data of the destination terminal.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 is a block diagram of a wireless local area network (WLAN)-based network connected with terminals;
FIG. 2 is a block diagram of a call processing apparatus in a Wireless Fidelity (WiFi) terminal or access point (AP) in a WiFi network according to the invention;
FIG. 3 is an IP table for an intercommunication function in a WiFi terminal or access point (AP) according to the invention;
FIG. 4 is a flowchart of a call processing method at a terminal in a WiFi network according to the invention; and
FIG. 5 is a flowchart of a call processing method at an AP in a WiFi network according to the invention.

### DETAILED DESCRIPTION OF THE INVENTION

The following detailed description will present preferred embodiments of a call processing apparatus and method in a Wireless Fidelity (WiFi) network according to the present invention.

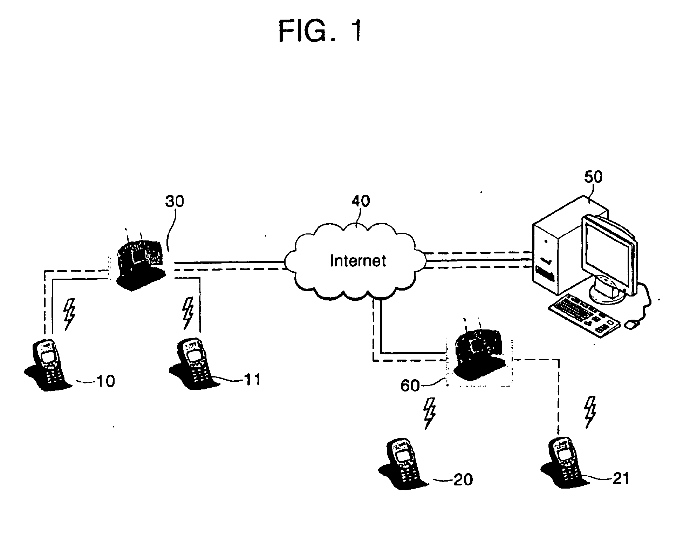

The call processing of an Internet terminal (such as a WiFi terminal) will be described with reference to FIG. 1.

FIG. 1 is a block diagram of a wireless local area network (WLAN)-based network connected with terminals.

As shown in FIG. 1, the network includes Internet terminals 10, 11, 20 and 21, access points (APs) 30 and 60, and a soft-switch 50. The APs 30 and 60 are connected with the soft-switch 50 via the Internet 40.

The Internet terminals 10, 11, 20 and 21 are WiFi terminals, which are Voice over Internet Protocol (VoIP) terminals wirelessly using the Internet. The WiFi terminals 10 and 11 are located in a service area of the AP 30. That is, the WiFi terminals 10 and 11 are registered with the AP 30, and are provided with WLAN service via the AP 30. The service area may be a house or other areas rather than a house. Hereinafter, it will be assumed that the WiFi terminals 10 and 11 are different terminals located in the same house.

The WiFi terminals 20 and 21 are registered with the AP 60. That is, the WiFi terminals 20 and 21 are located in a service area of the AP 60, and are provided with WLAN service via the AP 60.

The APs 30 and 60 are connected in line with the Internet 40, and perform relaying so that the WiFi terminals 10, 11, 20 and 21 can be connected to the Internet 40 and thus provided with VoIP service via the Internet 40.

The Internet 40 serves to physically connect the APs 30 and 60 with the soft-switch 50.

In general, the soft-switch 50 mediates the WiFi terminals 10, 11, 20 and 21 connected to the Internet 50, existing Internet telephones (not shown), and Voice over Internet Protocol (VoIP) gateways in order to relay messages in the event of call establishment, change and cancellation. In addition, upon receiving a telephone number from the APs 30 and 60 via the Internet 40, the soft-switch 50 converts the received telephone number into an IP address of a corresponding terminal, and attempts a call-connection to the corresponding terminal of the converted IP address so as to enable voice communication between terminals. The soft-switch 50 also functions to interface with a separate accounting machine or an application server, such as SMS and MMS.

Reference will now be made to a VoIP service operation between the described Internet terminals 10, 11, 20 and 21.

When a user inputs a telephone number via the (WiFi) terminal 10 for the purpose of a call connection with another terminal, the terminal 10 transmits its own telephone number, a destination terminal telephone number and port information for voice communication to the AP 30 via the WLAN.

The AP 30 sends the destination terminal telephone number from the terminal 10 to the soft-switch 50 via the Internet 40.

The soft-switch 50 converts the destination terminal telephone number received from the AP 30 into an IP address corresponding thereto, and sends a call connection request message to a destination terminal having the corresponding IP address via the Internet 40. Then, the call connection request message is provided to the destination terminal via an SIP server (not shown). That is, the SIP server sends the call connection request message to an AP to which the destination terminal having the corresponding IP address is registered so that the call connection request message can be transmitted to the destination terminal via the AP.

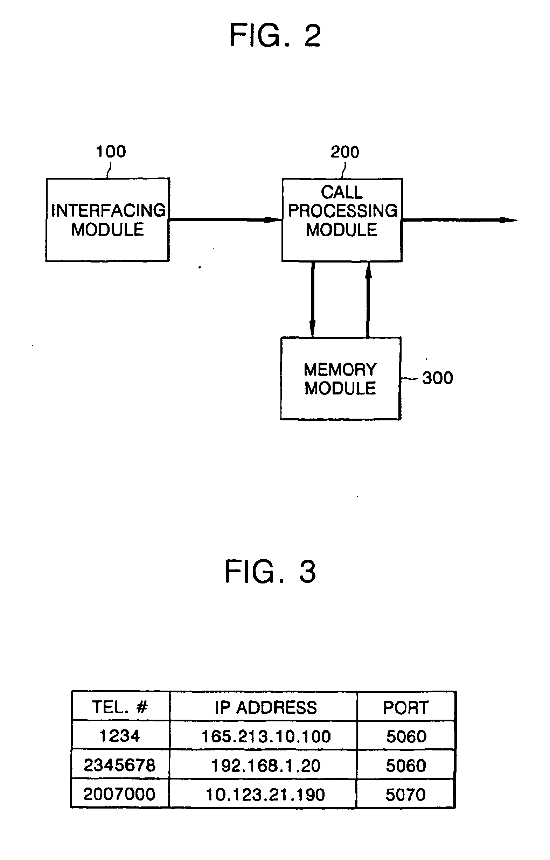

FIG. 2 is a block diagram of a call processing apparatus in a WiFi terminal or access point (AP) in a WiFi network according to the invention, and FIG. 3 is an IP table for an intercommunication function in a WiFi terminal or access point (AP) according to the invention.

The call processing apparatus as shown in FIG. 2 is mountable on a WiFi terminal or an AP, and includes an interfacing module 100, a call processing module 200, and a memory module 300.

First, in the call processing apparatus as shown in FIG. 2 mounted on the WiFi terminal, when a user inputs a destination terminal telephone number, the interfacing module 100 sends a call setup message including the input telephone number to the call processing module 200.

The call processing module 200 searches the memory module 300 according to the destination terminal telephone number included in the call setup message as received from the interfacing module 100 in order to determine whether the destination terminal of the corresponding telephone number is an in-house terminal (or a terminal located in a predetermined area) having an intercommunication function. The call processing module 200 may include a WLAN module, a VoIP module, and the like.

If the destination terminal of the corresponding telephone number has an intercommunication function, the call processing module 200 reads the IP address of the destination terminal, and transmits the IP address to the AP via a network.

The memory module 300 has an IP table as shown in FIG. 3, which IP table contains at least one data item selected from telephone numbers, IP addresses, port numbers and internet options. If the call processing apparatus shown in FIG. 2 is mounted on the WiFi terminal, some fields may be added to a phone book stored in an existing terminal so as to store the above data.

The call processing module 200 searches the memory module 300 according to the destination telephone number in the call setup message provided by the interfacing module 100 to determine whether a corresponding terminal is an in-house terminal (or a terminal located in a predetermined area) having an intercommunication function. The call processing module 200 may include a WLAN module, a VoIP module, and the like.

If the corresponding terminal is an in-house terminal having an intercommunication function, the call processing module 200 reads the IP address of the corresponding terminal, and sends a call connection request message to the corresponding destination terminal via the WLAN according to the corresponding IP address.

The memory module 300 has an IP table as shown in FIG. 3, which may contain at least one data item selected from telephone numbers, IP addresses, port numbers and internet options.

In a detailed description of the operations of the call processing apparatus having the above structure, the operations will be described separately according to whether the call processing apparatus as shown in FIG. 2 is mounted on a WiFi terminal or on an AP.

First, the operation of the call processing apparatus of FIG. 2, as mounted on a WiFi terminal, will be described.

First, when a user inputs a destination terminal telephone number, the interfacing module 100 of FIG. 2 sends the input telephone number to the call processing module 200.

The call processing module 200 searches the IP table stored in the memory module 300 to determine whether a destination terminal corresponding to the telephone number received from the interfacing module 100 has an intercommunication function.

If the destination terminal corresponding to the telephone number has an intercommunication function or an intercommunication option, as determined from a search of the IP table of the memory module 300, the call processing module 200 transmits an IP address and port number corresponding to the telephone number to the AP via the WLAN.

Then, the AP transmits a call connection request message to the destination terminal according to the IP address and port number received from the WiFi terminal, thereby establishing an intercommunication call connection between terminals.

However, if the destination terminal corresponding to the telephone number does not have an intercommunication function or an intercommunication option, as determined from a search of the IP table of the memory module 300, the call processing module 200 transmits a call connection message containing merely the destination terminal telephone number inputted by the user to the AP via the WLAN.

Then, the AP sends the destination terminal telephone number received from the call processing module 200 of the WiFi terminal to the soft-switch via the Internet.

The soft-switch searches an IP table managed by itself to find an IP address corresponding to the destination terminal telephone number received from the AP via the Internet. That is, the AP converts the destination terminal telephone number to the IP address, and then transmits a call connection request message via the Internet to the destination terminal corresponding to the IP address in order to attempt a call connection. The connecting operation between caller and called terminals via the soft-switch will not be described in detail since it is well known to those of ordinary skill in the art. While the above embodiment has been described in terms of the memory module 300 shown in FIG. 2 being provided with a separate IP table so as to perform the intercommunication function, an intercommunication operation substantially the same as the above operation can be performed by different means. For example, a phone book existing in a terminal, in which a user stores telephone numbers, may be additionally provided with fields so that an intercommunication option and an IP address and port number, as shown in FIG. 3, can be inputted thereto.

Now, the operation of the call processing apparatus of FIG. 2, as mounted on an AP, will be described.

First, when a user inputs a destination terminal telephone number to the WiFi terminal, the WiFi terminal transmits the input destination terminal telephone number to the AP via the WLAN.

The interfacing module 100 of the AP sends the destination terminal telephone number received from the WiFi terminal to the call processing module 200.

The call processing module 200 searches an IP table as shown in FIG. 3 to determine whether a terminal corresponding to the destination terminal telephone number interfaced from the interfacing module 100 has an intercommunication option.

If the destination terminal telephone number corresponds to the telephone number of a terminal having an intercommunication option as determined from a search of the IP table of the memory module 300, the call processing module 200 directly transmits a call connection request message to an IP address corresponding to the destination terminal telephone number set in the IP table of the memory module 300 via the WLAN, attempting intercommunication call connection between terminals.

When an intercommunication call connection is established between terminals, voice communication is enabled via a port number or port information corresponding to the IP address of the corresponding destination terminal stored in the IP table of the memory module 300. That is, if the destination terminal telephone number is the telephone number of a terminal having an intercommunication option set in the AP, the AP directly attempts a call connection with the corresponding destination terminal according to the IP address and port number without passing through the soft-switch.

However, when the call processing module 200 has searched the IP table as shown n FIG. 3 stored in the memory module 300, if the destination terminal telephone number received from the WiFi terminal is the telephone number of a terminal without an intercommunication option, the call processing module 200 sends a call connection request message, including the corresponding telephone number, to the soft-switch via the Internet.

The soft-switch searches an IP table managed by itself to find an IP address corresponding to the destination terminal telephone number received from the AP via the Internet, and transmits a call connection request message according to corresponding IP address and port number (or port information), attempting to establish a call connection between terminals.

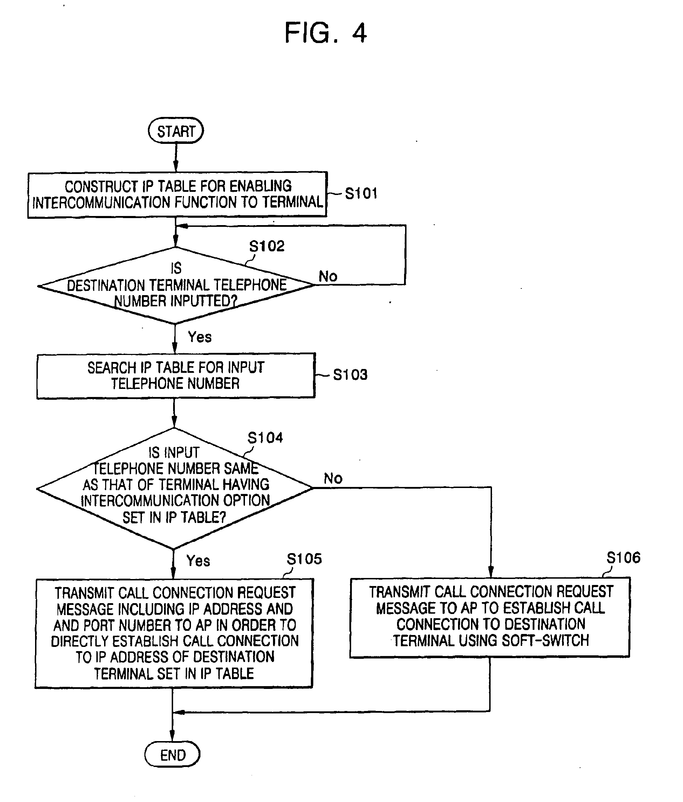

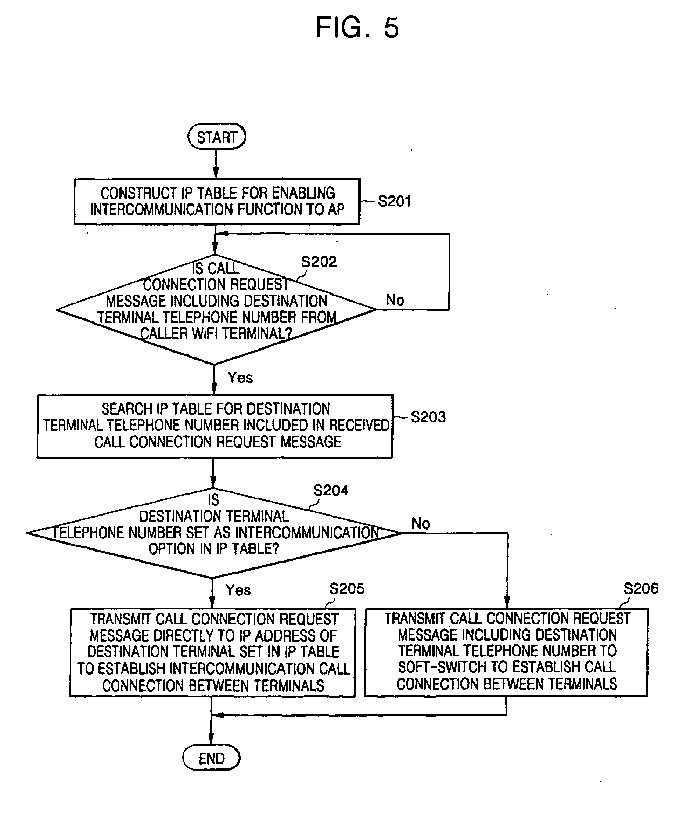

Now, referring to FIGS. 4 and 5, the call processing method of the invention, corresponding to the previously described operation of the call processing apparatus in the WiFi network of the invention, will be described.

FIG. 4 is a flowchart of a call processing method at a terminal in a WiFi network according to the invention.

First, when a user inputs destination terminal telephone number (S 102), an IP table or a phone book previously set in the WiFi terminal is searched (S103) according to the input destination terminal telephone number to determine whether an intercommunication option is set in a terminal corresponding to the input telephone number (S104). The intercommunication option set in the IP table or phone book stored in the WiFi terminal is the same as seen in FIG. 3. That is, the intercommunication option may include at least one of a telephone number, an IP address corresponding to the telephone number, and a port number (or port information) corresponding to the IP address.

A process of adding the intercommunication option to the phone book of the WiFi terminal (S101) will be described briefly.

First, the WiFi terminal has a phone book function. The phone book function relates to a storage table in which a user stores telephone numbers of his/her counterparts, and if necessary, uses the stored telephone numbers to attempt a call connection to a corresponding terminal.

The phone book function is used to add an IP table for enabling an intercommunication function as shown in FIG. 3. That is, input fields are added so that, upon displaying a phone book screen, the user can input an intercommunication option, an IP address and a port number simultaneously with a telephone number into the phone book, or add an intercommunication option, an IP address and a port number to a previously stored telephone number.

When the fields are added like in this manner, an intercommunication option such as an extension number is set in a corresponding field while an IP address and a port number are inputted to a corresponding telephone number in order to establish an IP table for enabling an intercommunication function.

In the meantime, a separate IP table may be constructed without using the phone book, and then a terminal telephone number, an IP address and a port number (or port information) of a terminal may inputted or set in corresponding fields of the separate IP table, so that the terminal can perform an intercommunication function independent of the phone book. The IP table preferably has a structure as shown in FIG. 3.

With the phone book or the separate IP table installed in the WiFi terminal, when a user inputs a destination terminal telephone number to the WiFi terminal (S102), the WiFi terminal searches the phone book or the separate IP table of the previously described setup (S103) to determine whether a terminal corresponding to the input telephone number has an intercommunication option (S104).

If the terminal corresponding to the destination terminal telephone number received from the user has an intercommunication option, the WiFi terminal transmits the IP address and the port number corresponding to the destination terminal telephone number to the AP via the WLAN (S105).

Then, the AP transmits a call connection request message to the IP address of the destination terminal received from the WiFi terminal so as to establish a call connection between terminals, thereby enabling intercommunication. In this case, the AP can attempt a call connection directly through the WLAN according to the IP address of the destination terminal instead of passing through the Internet, thereby enabling intercommunication as in extension phones.

However, if the terminal corresponding to the input telephone number does not have an intercommunication function set in the WiFi terminal, the WiFi terminal transmits the destination terminal telephone number to the AP via the WLAN, and then the AP sends the corresponding telephone number to the soft-switch via the Internet (S106).

The soft-switch then converts the destination terminal telephone number received from the AP via the Internet to an IP address by using an IP table managed by itself, and then transmits a call connection request message to the destination terminal via the Internet according to the IP address.

This call processing operation or intercommunication performed by the AP, instead of the WiFi terminal will now be described with reference to FIG. 5.

FIG. 5 is a flowchart of a call processing method at an AP in a WiFi network according to the invention.

As shown in FIG. 5, an IP table for enabling an intercommunication function is set (S201). The IP table is set in the form of database as shown in FIG. 3 since such a phone book function, such as that in a WiFi terminal as shown in FIG. 4, does not exist in an AP. An intercommunication option in the IP table may be set simultaneously with network establishment, or may be set directly by a user, as in the WiFi terminal.

With the IP table being set as above, when a destination terminal telephone number inputted by a user is received from the WiFi terminal via the WLAN (S202), the AP searches the IP table (S203) to determine whether a terminal corresponding to the destination terminal telephone number received from the WiFi terminal has an intercommunication option (S204).

If the terminal corresponding to the destination terminal telephone number has an intercommunication option as determined in step S204, the AP transmits a call connection request message to the corresponding destination terminal according to an IP address and port number corresponding to the destination terminal telephone number so as to establish call connection between terminals (S205). The call connection request message is transmitted directly from the AP to the destination terminal via the WLAN so as to enable an intercommunication call connection between terminals.

However, if the terminal corresponding to the destination terminal telephone number does not have an intercommunication option as determined in step S204, the AP transmits the destination terminal telephone number received from the WiFi terminal to the soft-switch via the Internet (S206).

Then, the soft-switch converts the destination terminal telephone number received from the AP via the Internet into an IP address by using an IP table managed by itself, and transmits the call connection request message to the destination terminal via the Internet according to the IP address, thereby establishing a call connection between terminals.

However, in the above explanation, the possibility that an in-house terminal is moved to another location out of the house has not been considered. In the event that a user moves a destination WiFi terminal to another location out of a service area of the AP, if the AP fails to receive a response message from the destination terminal after having transmitted the call connection request message to the terminal, the AP determines that the destination terminal has moved out of the service area. Then, the AP can transmit the call connection message, including the telephone number of the destination WiFi terminal, to the soft-switch via the Internet so that a call connection can be established via the soft-switch instead of intercommunication.

As described above, the call processing apparatus and method in the WiFi network system of the invention first construct an IP table for enabling an intercommunication option in the WiFi terminals. Upon receiving a destination terminal telephone number from a user, the call processing apparatus and method determine whether a destination terminal corresponding to the input telephone number has an intercommunication option set in the IP table. If the destination terminal has an intercommunication option, a call connection request message is transmitted directly to the destination terminal according to IP address and port number corresponding to the destination terminal telephone number so as to establish a call connection without having to pass through the soft-switch.

The IP table to which the intercommunication option is set may be provided to the AP instead of the WiFi terminals. Then, upon receiving a call connection request message from any of the WiFi terminals, the AP can search the IP table to determine whether a destination terminal corresponding to the input telephone number has an intercommunication option. If the destination terminal has an intercommunication option, the AP transmits a call processing message directly to the destination message according to IP address and port number corresponding to the input telephone number so as to establish a call connection.

In addition, the call processing apparatus and method in the WiFi network system of the invention construct an IP table for enabling an intercommunication function in the WiFi terminals. Upon receiving a destination terminal telephone number from a user, the apparatus and method determine whether a destination terminal corresponding to the input telephone number has an intercommunication option set in the IP table. If the destination terminal has an intercommunication option, a call connection request message is transmitted directly to the destination terminal via the AP according to IP address and port number corresponding to the input telephone number, thereby establishing a call connection without having to pass through the soft-switch.

The IP table in which the intercommunication option is set may be provided to the AP, instead of to the WiFi terminals. Then, upon receiving a call connection request message from any of the WiFi terminals, the AP can search the IP table to determine whether a destination terminal corresponding to the input telephone number has an intercommunication option. If the destination terminal has an intercommunication option, the AP transmits a call processing message directly to the destination message according to IP address and port number corresponding to the input telephone number so as to establish a call connection.

That is, the present invention enables a call processing message to be directly transmitted or received for communication between the in-house WiFi phones without having to pass through the soft-switch so that communication between the in-house WiFi phones can be enabled without connection to the soft-switch, even if the Internet malfunctions.

Furthermore, the invention has the advantageous effect of reducing the load on the soft-switch since unnecessary messages are not transmitted to the soft-switch.

While the present invention has been shown and described in connection with preferred embodiments, it will be apparent to those skilled in the art that modifications and variations can be made without departing from the scope of the invention as defined by the appended claims.

## Claims

1. A call processing method for a call processing apparatus in a wireless terminal of an Internet protocol IP network, the method comprising the steps of:
(a) constructing an IP table for enabling intercommunication connection between wireless terminals located in a predetermined service area by assigning an intercommunication option to these terminals, wherein the predetermined service area is equivalent to a part of a wireless local area network WLAN belonging to one access point comprising at least two wireless terminals, wherein all wireless terminals of one predetermined service area being able to intercommunicate with other wireless terminals of the predetermined service area neither using an Internet nor a soft-switch are marked with the intercommunication option; and
(b) when a telephone number inputted by a user for call connection to a destination terminal is identical to a telephone number of a wireless terminal having the intercommunication option set in the IP table, transmitting a call connection request message within the predetermined service area to the destination terminal according to IP information of the wireless terminal having the intercommunication option set in the IP table so as to establish intercommunication call connection between the user and the destination terminal.

2. The call processing method according to claim 1, wherein step (b) comprises:
when the received telephone number has the intercommunication option set in the IP table, transmitting the call connection request message to the destination terminal via an access point according to an IP address and port data set in the IP table and corresponding to the received telephone number.

3. The call processing method according to claim 1, wherein step (b) further comprises:
when the received telephone number does not have the intercommunication option set in the IP table, transmitting the call connection request message, including the telephone number received from the user, to a soft-switch via an Internet so as to establish the call connection with the destination terminal by using an IP table set in the soft-switch (50).

4. The call processing method according to claim 1 or 2, wherein step (b) comprises:
when a response message in response to the call connection request message is not received from the destination terminal within a predetermined time period, providing the call connection request message to a soft-switch via an Internet so as to transmit the call connection request message to the destination terminal via the soft-switch (50).

5. The call processing method according to one of the preceding claims, wherein the IP information of the terminal having the intercommunication option set in the IP table includes at least one of a telephone number, an IP address corresponding to the telephone number, and port data of the terminal having the intercommunication option.

6. The call processing method according to one of the preceding claims, wherein the IP table in which the intercommunication option is set is constructed by one of adding an intercommunication option setup field to a phone book function of the terminals and providing a separate intercommunication option setup IP table in a form of a database.

7. A call processing apparatus in a wireless terminal in an Internet protocol IP network, comprising:
a memory unit (300) for storing an IP table for enabling intercommunication call connection between wireless terminals located in a predetermined service area, wherein the predetermined service area is equivalent to a part of a wireless local area network WLAN belonging to one access point comprising at least two wireless terminals, wherein all wireless terminals of one predetermined service area being able to intercommunicate with other wireless terminals of the predetermined service area neither using an Internet nor a soft-switch are marked with the intercommunication option; and
a call processing unit (200) responsive to a telephone number for call connection with a destination terminal, being set as the intercommunication option in the IP table of the memory for transmitting a call connection request message within the predetermined service area to the destination terminal according to IP information set in the IP table and relating to the destination terminal corresponding to the telephone number received from the user so as to establish an intercommunication call connection between the terminals.

8. The call processing apparatus according to claim 7, wherein the call processing unit (200) comprises:
a determining part responsive to receiving the telephone number of the destination terminal for searching the IP table to determine whether the telephone number of the destination terminal is set for an intercommunication option; and
a call processing part responsive to the telephone number of the destination terminal being set for the intercommunication option for transmitting the call connection request message to the destination terminal according to an IP address and port data, corresponding to the telephone number of the destination terminal, set in the IP table.

9. The call processing apparatus according to claim 8, wherein, when it is determined that the received telephone number is not set for the intercommunication option, the call processing part transmits the call connection request message, including the telephone number, to a soft-switch via an Internet so as to establish a call connection with the destination terminal by using an IP table set in the soft-switch (50).

10. The call processing apparatus according to claim 7 or 8, wherein, when a response message in response to the call connection request message is not received from the destination terminal within a predetermined time period, the call processing part provides the call connection request message to a soft-switch via an Internet so that a call connection to the second terminal is established via the soft-switch (50).

11. The call processing apparatus according to claims 7 to 10, wherein the IP information set in the IP table includes at least one of a telephone number, an IP address corresponding to the telephone number, and port data of the destination terminal having the intercommunication option.

12. A Wireless Fidelity network, comprising:
at least two wireless terminals storing an Internet protocol (IP) table for enabling intercommunication between terminals located in a predetermined service area in a form of a database, wherein the predetermined service area is equivalent to a part of a wireless local area network WLAN belonging to one access point comprising at least two wireless terminals, wherein all wireless terminals of one predetermined service area being able to intercommunicate with other wireless terminals of the predetermined service area neither using an Internet nor a soft-switch are marked with the intercommunication option,
wherein, when a telephone number of a destination terminal received from a user is set for the intercommunication option in the IP table, the terminal transmits a call connection request message, including an IP address and port data of the destination terminal set in the IP table, via a wireless local area network WLAN; and
an access point for transmitting the call connection request message to the destination terminal via the WLAN according to the IP address and the port data of the destination terminal included in the call connection request message so as to establish an intercommunication call connection with the destination terminal.

## Patentansprüche

1. Verbindungsbearbeitungsverfahren für eine Verbindungsbearbeitungsvorrichtung in einem drahtlosen Endgerät eines Internetprotokoll IP Netzwerks, wobei das Verfahren die Schritte aufweist:
(a) Aufbauen einer IP-Tabelle zum Ermöglichen einer Wechselsprechverbindung zwischen drahtlosen Endgeräten, die sich in einem vorbestimmten Dienstebereich befinden, durch Zuweisen einer Wechselsprechoption zu diesen Endgeräten, wobei der vorbestimmte Dienstebereich äquivalent ist mit einem Teil eines drahtlosen lokalen Netzwerks WLAN, das zu einem Zugangspunkt gehört, der mindestens zwei drahtlose Endgeräte aufweist, wobei alle drahtlosen Endgeräte eines vorbestimmten Dienstebereichs, die in der Lage sind wechselseitig mit anderen drahtlosen Endgeräten des vorbestimmten Dienstebereichs zu kommunizieren und dabei weder ein Internet noch einen Softswitch verwenden, sind mit der Wechselsprechoption gekennzeichnet; und
(b) wenn eine von einem Benutzer eingegebene Telefonnummer für eine Verbindung an ein Zielendgerät identisch ist mit einer Telefonnummer eines drahtlosen Endgeräts mit der in der IP-Tabelle eingestellten Wechselsprechoption, Übertragen einer Verbindungsanforderungsmitteilung innerhalb des vorbestimmten Dienstebereichs an das Zielendgerät gemäß IP-Information des drahtlosen Endgeräts mit der in der IP-Tabelle eingestellten Wechselsprechoption, um eine Wechselsprechverbindung zwischen dem Benutzer und dem Zielendgerät herzustellen.

2. Verbindungsbearbeitungsverfahren nach Anspruch 1, wobei der Schritt (b) aufweist:
wenn die empfangene Telefonnummer die in der IP-Tabelle eingestellte Wechselsprechoption hat, Übertragen der Verbindungsanforderungsmitteilung an das Zielendgerät über einen Zugangspunkt gemäß einer IP-Adresse und Portdaten, die in der IP-Tabelle eingestellt sind, und entsprechend der empfangenen Telefonnummer.

3. Verbindungsbearbeitungsverfahren nach Anspruch 1, wobei der Schritt (b) weiterhin aufweist:
wenn die empfangene Telefonnummer nicht die in der IP-Tabelle eingestellte Wechselsprechoption aufweist, Übertragen der Verbindungsanforderungsmitteilung, welche die von dem Benutzer empfangene Telefonnummer enthält, an einen Softswitch über ein Internet, so dass die Verbindung mit dem Zielendgerät hergestellt wird unter Verwendung einer IP-Tabelle, die in dem Softswitch (50) eingestellt ist.

4. Verbindungsbearbeitungsverfahren nach Anspruch 1 oder 2, wobei der Schritt (b) aufweist:
wenn eine Antwortmitteilung in Antwort auf die Verbindungsanforderungsmitteilung nicht innerhalb einer vorbestimmten Zeitdauer von dem Zielendgerät empfangen wird, Bereitstellen der Verbindungsanforderungsmitteilung an einen Softswitch über ein Internet, so dass die Verbindungsanforderungsmitteilung an das Zielendgerät über den Softswitch (50) übertragen wird.

5. Verbindungsbearbeitungsverfahren nach einem der vorhergehenden Ansprüche, wobei die IP-Information des Endgeräts mit der in der IP-Tabelle eingestellten Wechselsprechoption mindestens eine aus einer Telefonnummer, einer IP-Adresse entsprechend der Telefonnummer und Portdaten des Endgeräts mit der Wechselsprechoption umfasst.

6. Verbindungsbearbeitungsverfahren gemäß einem der vorhergehenden Ansprüche, wobei die IP-Tabelle, in welcher die Wechselsprechoption eingestellt ist, aufgebaut wird durch eines von einem Hinzufügen eines Wechselsprechoptions-Einstellfelds zu einer Telefonbuchfunktion der Endgeräte und einem Bereitstellen einer separaten Wechselsprechoptions-Einstell-IP-Tabelle in einer Form einer Datenbank.

7. Verbindungsbearbeitungsvorrichtung in einem drahtlosen Endgerät in einem Internetprotokoll IP-Netzwerk, aufweisend:
eine Speichereinheit (300) zum Speichern einer IP-Tabelle zum Ermöglichen einer Wechselsprechverbindung zwischen drahtlosen Endgeräten, die sich in einem vorbestimmten Dienstebereich befinden, wobei der vorbestimmte Dienstebereich äquivalent ist mit einem Teil eines drahtlosen lokalen Netzwerks WLAN, das zu einem Zugangspunkt gehört, der mindestens zwei drahtlose Endgeräte aufweist, wobei alle drahtlosen Endgeräte eines vorbestimmten Dienstebereichs, die in der Lage sind wechselseitig mit anderen drahtlosen Endgeräten des vorbestimmten Dienstebereichs zu kommunizieren und dabei weder ein Internet noch einen Softswitch verwenden, mit der Wechselsprechoption gekennzeichnet sind; und
eine Verbindungsbearbeitungseinheit (200), die auf eine Telefonnummer für eine Verbindung mit einem Zielendgerät reagiert, für welche die Wechselsprechoption in der IP-Tabelle des Speichers eingestellt ist, um eine Verbindungsanforderungsmitteilung innerhalb des vorbestimmten Dienstebereichs an das Zielendgerät gemäß IP-Information, die in der IP-Tabelle eingestellt ist und die sich auf das Zielendgerät bezieht, entsprechend der von dem Benutzer empfangenen Telefonnummer zu übertragen, um eine Wechselsprechverbindung zwischen den Endgeräten herzustellen.

8. Verbindungsbearbeitungsvorrichtung nach Anspruch 7, wobei die Verbindungsbearbeitungseinheit (200) aufweist:
ein Bestimmungsteil, das auf ein Empfangen der Telefonnummer des Zielendgeräts reagiert, um die IP-Tabelle zu durchsuchen, um zu bestimmen, ob die Telefonnummer des Zielendgeräts für eine Wechselsprechverbindungsoption eingestellt ist, und
ein Verbindungsbearbeitungsteil, das auf die Telefonnummer des Zielendgeräts reagiert, für das die Wechselsprechoption eingestellt ist, um die Verbindungsanforderungsmitteilung an das Zielendgerät gemäß einer IP-Adresse und Portdaten entsprechend der in der IP-Tabelle eingestellten Telefonnummer des Zielendgeräts zu übertragen.

9. Verbindungsbearbeitungsvorrichtung nach Anspruch 8, wobei, wenn es bestimmt wird, dass die empfangene Telefonnummer nicht für die Wechselsprechoption eingestellt ist, überträgt das Verbindungsbearbeitungsteil die Verbindungsanforderungsmitteilung, welche die von dem Benutzer empfangene Telefonnummer enthält, an einen Softswitch über ein Internet, so dass die Verbindung mit dem Zielendgerät hergestellt wird unter Verwendung einer in dem Softswitch (50) eingestellten IP-Tabelle.

10. Verbindungsbearbeitungsvorrichtung nach Anspruch 7 oder 8, wobei, wenn eine Antwortmitteilung in Antwort auf die Verbindungsanforderungsmitteilung nicht innerhalb einer vorbestimmten Zeitdauer von dem Zielendgerät empfangen wird, stellt das Verbindungsbearbeitungsteil die Verbindungsanforderungsmitteilung an einen Softswitch über ein Internet bereit, so dass die Verbindung mit dem zweiten Endgerät über den Softswitch (50) hergestellt wird.

11. Verbindungsbearbeitungsvorrichtung nach Ansprüchen 7 bis 10, wobei die in der IP-Tabelle eingestellten IP-Information mindestens eine aus einer Telefonnummer, einer IP-Adresse entsprechend der Telefonnummer, und Portdaten des Zielendgeräts mit der Wechselsprechoption umfasst.

12. Wireless Fidelity-Netzwerk, aufweisend:
mindestens zwei drahtlose Endgeräte, die eine Internetprotokoll (IP)-Tabelle in einer Form einer Datenbank speichern, zum Ermöglichen wechselseitig zwischen Endgeräten zu kommunizieren, die sich in einem vorbestimmten Dienstebereich in Form einer Datenbank befinden, wobei der vorbestimmte Dienstebereich äquivalent ist mit einem Teil eines drahtlosen lokalen Netzwerks WLAN, das zu einem Zugangspunkt gehört, der mindestens zwei drahtlose Endgeräte aufweist, wobei alle drahtlosen Endgeräte eines vorbestimmten Dienstebereichs, die in der Lage sind wechselseitig mit anderen drahtlosen Endgeräten des vorbestimmten Dienstebereichs zu kommunizieren und dabei weder ein Internet noch einen Softswitch verwenden, mit der Wechselsprechoption gekennzeichnet sind,
wobei, wenn eine von einem Benutzer empfangene Telefonnummer eines Zielendgeräts für die Wechselsprechverbindungsoption in der IP-Tabelle eingestellt ist, überträgt das Endgerät eine Verbindungsanforderungsmitteilung, die eine IP-Adresse und Portdaten des Zielendgeräts umfasst, die in der IP-Tabelle eingestellt sind, über ein drahtloses lokales Netzwerk WLAN; und
einen Zugangspunkt zum Übertragen der Verbindungsanforderungsmitteilung an das Zielendgerät über das WLAN gemäß der IP-Adresse und den Portdaten des Zielendgeräts, die in der Verbindungsanforderungsmitteilung enthalten sind, um eine Wechselsprechverbindung mit dem Zielendgerät herzustellen.

## Revendications

1. Un procédé de traitement des appels dans un dispositif de traitement des appels dans un terminal sans fil d'un réseau à protocole Internet IP, le procédé comprenant les étapes suivantes :
(a) construction d'une table IP pour permettre une connexion d'intercommunication entre des terminaux sans fil situés dans une zone de service prédéterminée par attribution d'une option d'intercommunication à ces terminaux, où la zone de service prédéterminée est équivalente à une partie d'un réseau sans fil de zone locale WLAN appartenant à un point d'accès comprenant au moins deux terminaux sans fil, où tous les terminaux sans fil d'une zone de service prédéterminée sont capables d'intercommuniquer avec d'autres terminaux sans fil de la zone de service prédéterminée sans utiliser ni un internet ni une commutation logicielle sont marqués avec l'option d'intercommunication ; et
(b) lorsqu'un numéro de téléphone entré par un utilisateur pour une connexion d'appel à un terminal de destination est identique à un numéro de téléphone d'un terminal sans fil ayant l'option d'intercommunication indiquée dans la table IP, émission d'un message de requête de connexion d'appel à l'intérieur de la zone de service prédéterminée vers le terminal de destination en fonction de l'information IP du terminal sans fil ayant l'option d'intercommunication marquée dans la table IP afin d'établir une connexion d'appel d'intercommunication entre l'utilisateur et le terminal de destination.

2. Le procédé de traitement des appels selon la revendication 1, dans lequel l'étape (b) comprend :
lorsque le numéro de téléphone reçu possède l'option d'intercommunication indiquée dans la table IP, l'émission du message de requête de connexion d'appel vers le terminal de destination via un point d'accès en fonction d'une adresse IP et de données de port indiquées dans la table IP et correspondant au numéro de téléphone reçu.

3. Le procédé de traitement des appels selon la revendication 1, dans lequel l'étape (b) comprend en outré :
lorsque le numéro de téléphone n'a pas l'option d'intercommunication indiquée dans la table IP, l'émission du message de requête de connexion d'appel, incluant le numéro de téléphone reçu de l'utilisateur, vers un commutateur logiciel via un internet de manière à établir la connexion d'appel avec le terminal de destination par utilisation d'une table IP installée dans le commutateur logiciel (50).

4. Le procédé de traitement des appels selon la revendication 1 ou 2, dans lequel l'étape (b) comprend :
lorsqu'un message de réponse en réponse au message de requête de connexion d'appel n'est pas reçu du terminal de destination dans une période de temps prédéterminée, l'application du message de requête de connexion d'appel à un commutateur logiciel via Internet de manière à transmettre le message de requête de connexion d'appel au terminal de destination via le commutateur logiciel (50).

5. Le procédé de traitement des appels selon l'une des revendications précédentes, dans lequel l'information IP du terminal dont l'option d'intercommunication est indiquée dans la table IP comprend au moins l'un d'entre un numéro de téléphone, une adresse IP correspondant au numéro de téléphone, et une donnée de port du terminal possédant l'option d'intercommunication.

6. Le procédé de traitement des appels selon l'une des revendications précédentes, dans lequel la table IP dans laquelle est indiquée l'option d'intercommunication est construite par l'un d'entre l'addition d'un champ d'initialisation d'option d'intercommunication à une fonction de répertoire des terminaux et l'établissement d'une table IP d'initialisation d'option d'interconnexion distincte sous forme d'une base de données.

7. Un dispositif de traitement des appels dans un terminal sans fil dans un réseau à protocole Internet IP, comprenant :
une unité de mémoire (300) pour stocker une table IP pour permettre une connexion d'intercommunication entre des terminaux sans fil situés dans une zone-de service prédéterminée, où la zone de service prédéterminée est équivalente à une partie d'un réseau sans fil de zone locale WLAN appartenant à un point d'accès comprenant au moins deux terminaux sans fil, où tous les terminaux sans fil d'une zone de service prédéterminée sont capables d'intercommuniquer avec d'autres terminaux sans fil de la zone de service prédéterminée sans utiliser ni un internet ni une commutation logicielle sont marqués avec l'option d'intercommunication ; et
une unité de traitement des appels (200) opérant en réponse à un numéro de téléphone pour une connexion d'appel avec un terminal de destination, avec indication comme l'option d'intercommunication dans la table IP de la mémoire pour l'émission d'un message de requête de connexion d'appel au sein de la zone de service prédéterminée vers le terminal de destination en fonction de l'information IP indiquée dans la table IP pour mettre en relation le terminal de destination correspondant au numéro de téléphone reçu de l'utilisateur afin d'établir une connexion d'appel d'intercommunication entre les terminaux.

8. Le dispositif de traitement des appels selon la revendication 7, dans lequel l'unité de traitement des appels (200) comprend :
une partie de détermination opérant en réponse à la réception du numéro de téléphone du terminal de destination pour explorer la table IP afin de déterminer si le numéro de téléphone du terminal de destination est ou non indiqué avec une option d'intercommunication ; et
une partie de traitement des appels opérant en réponse au numéro de téléphone du terminal de destination qui est indiqué avec l'option d'intercommunication pour émettre le message de requête de connexion d'appel vers le terminal de destination en fonction d'une adresse IP et d'une donnée de port, correspondant au numéro de téléphone du terminal de destination, indiqué dans la table IP.

9. Le dispositif de traitement des appels selon la revendication 8, dans lequel, lorsqu'il a été déterminé que le numéro de téléphone reçu n'est pas indiqué avec l'option d'intercommunication, la partie de traitement des appels émet le message de requête de connexion d'appel, incluant le numéro de téléphone, vers un commutateur logiciel via un internet de manière à établir une connexion d'appel avec le terminal de destination par utilisation d'une table IP installée dans le commutateur logiciel (50).

10. Le dispositif de traitement des appels selon la revendication 7 ou 8, dans lequel, lorsqu'un message de réponse en réponse au message de requête de connexion d'appel n'est pas reçu du terminal de destination dans une période de temps prédéterminée, la partie de traitement des appels applique le message de requête de connexion d'appel à un commutateur logiciel via un internet de manière à pouvoir établir une connexion d'appel vers le second terminal via le commutateur logiciel (50).

11. Le dispositif de traitement des appels selon les revendications 7 à 10, dans lequel l'information IP indiquée dans la table IP comprend au moins l'un d'entre un numéro de téléphone, une adresse IP correspondant au numéro de téléphone et une donnée de port du terminal de destination possédant l'option d'intercommunication.

12. Un réseau Wi-Fi comprenant :
au moins deux terminaux sans fil mémorisant une table de protocole Internet (IP) pour permettre une intercommunication entre des terminaux situés dans une zone de service prédéterminée sous forme d'une base de données, où la zone de service prédéterminée est équivalente à une partie d'un réseau sans fil de zone locale WLAN appartenant à un point d'accès comprenant au moins deux terminaux sans fil, où tous les terminaux sans fil d'une zone de service prédéterminée sont capables d'intercommuniquer avec d'autres terminaux sans fil de la zone de service prédéterminée sans utiliser un internet ni un commutateur logiciel, sont marqués avec l'option d'intercommunication,
dans lequel, lorsqu'un numéro de téléphone d'un terminal de destination reçu d'un utilisateur est indiqué avec l'option d'intercommunication dans la table IP, le terminal émet un message de requête de connexion d'appel, incluant une adresse IP et une donnée de port du terminal de destination indiqué dans la table IP, via un réseau sans fil de zone locale WLAN ; et
un point d'accès pour émettre le message de requête de connexion d'appel vers le terminal de destination via le WLAN en fonction de l'adresse IP et de la donnée de port du terminal de destination se trouvant dans le message de requête de connexion d'appel de manière à établir une connexion d'appel d'intercommunication avec le terminal de destination.
